(19) Europäisches Patentamt
European Patent Office
Office européen des brevets

(11) **EP 4 198 396 A1**

(12) **EUROPÄISCHE PATENTANMELDUNG**

(43) Veröffentlichungstag:
**21.06.2023  Patentblatt 2023/25**

(21) Anmeldenummer: **22211672.5**

(22) Anmeldetag: **06.12.2022**

(51) Internationale Patentklassifikation (IPC):
**F23R 3/06** (2006.01)          **F23R 3/50** (2006.01)
**F23R 3/00** (2006.01)

(52) Gemeinsame Patentklassifikation (CPC):
**F23R 3/50; F23R 3/002; F23R 3/06**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **16.12.2021  DE 102021214499**

(71) Anmelder: **Rolls-Royce Deutschland Ltd & Co KG 15827 Blankenfelde-Mahlow (DE)**

(72) Erfinder: **STAUFER, Max 15827 Blankenfelde-Mahlow (DE)**

(54) **BRENNKAMMERBAUGRUPPE MIT SPEZIFISCH ANGEORDNETEN MISCHLUFTLÖCHERN AN INNERER UND ÄUSSERER BRENNKAMMERWAND**

(57)    Die Erfindung betrifft eine Brennkammerbaugruppe, mit einer Brennkammer (BK) für ein Triebwerk (T), die innere und äußere Brennkammerwände (32a, 32b) zur Berandung eines Brennraums (30) der Brennkammer (BK) umfasst.

An einander gegenüberliegenden ersten und zweiten Wandsegmenten (320a, 320b) der inneren und äußeren Brennkammerwände (32a) sind jeweils drei Mischluftlöcher (6.1a-6.3a, 7.1a-7.2a; 6.1b-6.2b, 7.1b-7.3b) mit ihren jeweiligen Mittelpunkten an Eckpunkten eines virtuellen ersten oder zweiten Dreiecks (LDa, LDb) angeordnet. Das zweite Dreieck (LDb) des zweiten Wandsegments (320b) der äußeren Brennkammerwand (32b) ist hierbei zu dem ersten Dreieck (LDa) des ersten Wandsegments (320a) der inneren Brennkammerwand (32a) um 180° gedreht ausgerichtet und die in Reihen (6a, 7a; 6b, 7b) angeordneten Mischluftlöcher an den ersten und zweiten Wandsegmenten (320a, 320b) sind derart zueinander angeordnet, dass die an den Eckpunkten der ersten und zweiten Dreiecke (LDa) angeordneten Mischluftlöcher (6.1a-6.3a, 7.1a-7.2a; 6.1b-6.2b, 7.1b-7.3b) der ersten und zweiten Wandsegmente (320a, 320b) jeweils keinem Mischluftloch des zweiten oder ersten Wandsegments (320b, 320a) gegenüberliegen.

Fig. 1

**Beschreibung**

Die vorgeschlagene Lösung betrifft eine Brennkammerbaugruppe für ein Triebwerk.

Eine Brennkammerbaugruppe für ein Triebwerk umfasst grundsätzlich eine Brennkammer, deren Brennraum durch innere und äußere Brennkammerwände berandet ist. Beispielsweise ist die Brennkammer als Ringbrennkammer mit einer radial innen liegenden Brennkammerwand und einer radial außen liegenden Brennkammerwand ausgebildet. Der Brennraum erstreckt sich hierbei der entlang einer Mittelachse in eine Achsrichtung von einem ersten axialen Ende mit einem Brennkammerkopf zu einem zweiten axialen Ende, an dem bei der Verbrennung in dem Brennraum entstehende Abgase zu einer Turbine des Triebwerks für die Erzeugung von Schub geleitet werden.

Für die Verbrennung in dem Brennraum sind an der äußeren und inneren Brennkammerwand regelmäßig Mischluftlöcher vorgesehen, über die Mischluft in den Brennraum hineingeleitet werden kann. Aus der EP 3 306 196 A1 ist es dabei insbesondere bekannt, Mischluftlöcher sowohl an der inneren als auch an der äußeren Brennkammerwand in in einer Achsrichtung aufeinander folgenden Reihen anzuordnen, wobei die Abstände der Mischluftlöcher innerhalb der Reihen und die Abstände der Reihen untereinander spezifisch vorgegeben sind, sodass die Mischluftlöcher in einem bestimmten Muster angeordnet sind. Insbesondere schlägt die EP 3 306 196 A1 vor, Mischluftlöcher an den Brennkammerwänden jeweils reihenweise zueinander versetzt anzuordnen, um eine bestimmte Mischluftströmung innerhalb des Brennraums stromab einer Treibstoffdüse der Brennkammerbaugruppe einzustellen. Als vorteilhaft wird es hierbei insbesondere angesehen, Mischluftlöcher der inneren und äußeren Brennkammerwände einander gegenüberliegend anzuordnen, sodass eine Mischluftströmung aus einem Mischluftloch der einen Brennkammerwand in Richtung einer Mischluftströmung aus einem Mischluftloch der anderen Brennkammerwand geleitet wird.

Es hat sich nun aber gezeigt, dass insbesondere bei Brennkammern, die ein vergleichsweise großes sogenanntes Pitch-Höhen-Verhältnis aufweisen, aus dem Stand der Technik bekannte Mischluftanordnungen nicht immer vorteilhaft sind. Unter einem Pitch wird hierbei eine in Umfangsrichtung gemessene Breite eines stirnseitigen Hitzeschildsegments verstanden, an dem eine von mehreren in Umfangsrichtung verteilt an einem Kopfabschnitt der Brennkammer vorgesehenen Treibstoffdüsen angeordnet ist. Als maßgebliche Höhe für das Pitch-Höhen-Verhältnis wird ferner die Höhe des Hitzeschildsegments verstanden, die mit dem Abstand zwischen der inneren Brennkammerwand und der äußeren Brennkammerwand an dem ersten axialen Ende der Brennkammer korrespondiert. Insbesondere bei Triebwerken mit Brennkammern, die ein vergleichsweise großes Pitch-Höhen-Verhältnis aufweisen, besteht Bedarf für eine verbesserte Anordnung von Mischluftlöchern, um eine effektive lokale Vermischung von eingespritztem Treibstoff und Mischluft zu erreichen und insbesondere NOx-Emissionen zu verringern.

Hier schafft eine Brennkammerbaugruppe des Anspruchs 1 Abhilfe.

So ist eine Brennkammerbaugruppe vorgeschlagen, bei der sowohl die innere Brennkammerwand als auch die äußere Brennkammerwand in Umfangsrichtung jeweils in Wandsegmente unterteilt sind, an denen die Mischluftlöcher jeweils in einem vorgegebenen Muster angeordnet sind. Die Mischluftlöcher sind folglich in sich segmentweise wiederholenden Mustern an den inneren und äußeren Brennkammerwänden angeordnet. Gemäß der vorgeschlagenen Lösung ist nun weiterhin vorgesehen, dass an einem ersten Wandsegment der inneren Brennkammerwand drei Mischluftlöcher zweier in Achsrichtung aufeinanderfolgender Reihen mit ihren jeweiligen Mittelpunkten an Eckpunkten eines virtuellen ersten Dreiecks angeordnet sind und an einem zweiten Wandsegment der äußeren Brennkammerwand, das dem ersten Wandsegment gegenüberliegt, drei Mischluftlöcher zweier in Achsrichtung aufeinander folgenden Reihen mit ihren jeweiligen Mittelpunkten an Eckpunkten eines virtuellen zweiten Dreiecks angeordnet sind. Das zweite Dreieck ist hierbei zu dem ersten Dreieck um 180° gedreht ausgerichtet und die jeweiligen Mischluftlöcher sind in den Reihen an den ersten und zweiten Wandsegmenten derart zueinander angeordnet, dass die an den Eckpunkten der ersten und zweiten Dreiecke angeordneten Mischluftlöcher der ersten und zweiten Wandsegmente jeweils keinem Mischluftloch des (jeweiligen anderen) zweiten oder ersten Wandsegments gegenüberliegen.

Eine Gruppe von drei Mischluftlöchern an der äußeren (zweiten) Brennkammerwand ist somit lokal und segmentweise zu einer ersten Gruppe von drei Mischluftlöchern an der inneren (ersten) Brennkammerwand invers angeordnet. Hierdurch ergibt sich ein axialer Versatz zwischen den drei Mischluftlöchern an dem ersten, inneren Wandsegment und dem zweiten, äußeren Wandsegment. Die mit der vorgeschlagenen Lösung vorgesehen Anordnung der Mischluftlöcher legt damit ein spezifisches Muster zugrunde, das sich in der Praxis als besonders vorteilhaft gerade für Brennkammern mit einem vergleichsweise großen Pitch-Höhen-Verhältnis herausgestellt hat. Die zueinander inverse Anordnung der Gruppe von drei Mischluftlöchern geht dabei von dem Ansatz aus, auf vergleichsweise geringem Bauraum drei jeweils jetartige Mischluftströmungen an der ersten Brennkammerwand und drei ebenfalls jeweils jetartige Mischluftströmungen an der gegenüberliegenden anderen Brennkammerwand zu erzeugen, wobei die dann sechs Mischluftströmungen in Umfangsrichtung und axial zueinander verletzt in den Brennraum geleitet werden. Es hat sich gezeigt, dass sich hierüber eine Zone an Mischluft erzeugen lässt, die für einen unmittelbar hierin eingespritzt Treibstoff besonders vorteilhaft ist, wenn die Brennkammer eine vergleichsweise geringe Höhe aufweist. Dementsprechend wird in einer Ausführungsvariante die Anordnung der ersten und zweiten Wandsegmente mit der vorgeschlagenen Mischluftlochanordnung unmittelbar stromab einer Treibstoffdüse der Brennkammerbaugruppe vorgesehen. Je einem Paar von ersten und zweiten Wandsegmenten ist somit ein Düsenkopf einer Treibstoffdüse der Brennkammerbaugruppe zugeordnet.

In einer Ausführungsvariante sind das erste Dreieck und das zweite Dreieck, die die Positionierung der Mischluftlöcher an dem ersten, inneren und dem zweiten, äußeren Wandsegment definieren, jeweils gleichschenklig. Gleichwohl hiermit ein axialer Versatz zwischen den beiden Dreiecken und damit insbesondere zwischen den an unterschiedlichen Wandsegmenten vorgesehenen Reihen von Mischluftlöchern weiterhin nicht ausgeschlossen ist, erleichtert die Vorgabe der Positionen der Mischluftlöcher über zwei gleichschenklige Dreiecke eine stärker symmetrische Anordnung der Mischluftlöcher. Eine solche symmetrische Anordnung der Dreiecke (und damit der hierüber in ihrer Position vorgegebenen Mischluftlöcher) schließt beispielsweise ein, dass die Spitze wenigstens eines der Dreiecke auf der Basis des anderen Dreiecks liegt. So ist beispielsweise in einer Ausführungsvariante vorgesehen, dass die Spitze des ersten gleichschenkligen Dreiecks und die Spitze des zweiten gleichschenkligen Dreiecks jeweils auf der Basis des jeweils anderen Dreiecks liegen.

Alternativ oder ergänzend können in einer Draufsicht entlang einer Blickrichtung, die senkrecht zu der Achsrichtung und senkrecht zu der Umfangsrichtung verläuft (und damit beispielsweise bezüglich der Mittelachse der Brennkammer radial verläuft), die Spitze des ersten gleichschenkligen Dreiecks und die Spitze des zweiten gleichschenkligen Dreiecks auf einer Symmetrieachse liegen, zu der, in dieser Draufsicht, ein erstes Muster der Mischluftlöcher an dem ersten Wandsegment (achs-)symmetrisch ist und zu der, ebenfalls in der Draufsicht, ein zweites Muster der Mischluftlöcher an dem zweiten Wandsegment (achs-)symmetrisch ist.

Die Symmetrieachse kann hierbei insbesondere parallel zu einer Düsenachse verlaufen, entlang der sich ein Düsenkopf einer zur Einspritzung von Treibstoff in den Brennraum vorgesehenen Treibstoffdüse der Brennkammerbaugruppe erstreckt. Derart liegen die zwei an den Spitzen der gleichschenkligen Dreiecke vorgesehenen Mischluftlöcher in Achsrichtung unmittelbar stromab des Düsenkopfes. Ferner definieren die insgesamt sechs über die ersten und zweiten Dreiecke in ihrer Position vorgegebenen Mischluftlöcher an der inneren Brennkammerwand und der äußeren Brennkammerwand einer lokal begrenzten Mischluftzone unmittelbar stromab des Düsenkopfes, für die die sechs Mischluftlöcher axial und in Umfangsrichtung zueinander versetzt sind.

Grundsätzlich können die Abmessungen der Mischluftlöcher, insbesondere deren Durchmesser bei kreisförmigen Mischluftlöchern, zueinander unterschiedlich sein, sowohl innerhalb einer jeweiligen Reihe oder an einem Wandsegment aber auch je nachdem, ob das Mischluftloch an der inneren oder der äußeren Brennkammerwand vorgesehen ist. Jedoch kann auch vorgesehen sein, dass die Abmessungen der Mischluftlöcher zueinander identisch sind.

In einer Ausführungsvariante der vorgeschlagenen Lösung, bei der insbesondere die Gruppen von Mischluftlöchern an den sich gegenüberliegenden Wandsegmenten mit einer gewissen Symmetrie zueinander positioniert sind, sind das erste gleichschenklige Dreieck und das zweite gleichschenklige Dreieck identisch. Hierunter wird verstanden, dass die Basis und die Schenkel der Dreiecke jeweils die gleichen Längen aufweisen, sodass die Mittelpunkte der hierüber in ihrer Position an dem jeweiligen Wandsegment definierten Mischluftlöcher an dem ersten (inneren) und dem zweiten (äußeren) Wandsegment gleich zueinander beabstandet sind.

In einer Ausführungsvariante sind an einem Wandsegment zusätzlich zu der Gruppe von Mischluftlöchern, deren Position über das jeweilige erste oder zweite Dreieck vorgegeben ist, noch weitere Mischluftlöcher vorgesehen, beispielsweise wenigstens zwei Mischluftlöcher je Wandsegment. So kann beispielsweise an dem ersten Wandsegment und/oder an dem zweiten Wandsegment eine (bezogen auf die Achsrichtung) vordere Reihe mit zwei oder drei Mischluftlöchern und eine hintere Reihe mit drei oder zwei Mischluftlöchern vorgesehen sein. Auch mit Blick auf die weiteren Mischluftlöcher haben sich hierbei eine bestimmte Art der Positionierung und damit ein spezifisches Muster je Wandsegment für bestimmte Brennraumgeometrien und -dimensionen als vorteilhaft erwiesen. Beispielsweise ist ein in Umfangsrichtung gemessener Abstand zwischen dem einen Mischluftloch (dessen Mittelpunkt an einem Eckpunkt des ersten oder zweiten Dreiecks vorgesehen ist) und einem weiteren Mischluftloch - innerhalb einer Reihe - größer gewählt als ein Abstand des weiteren Mischluftlochs zu einem in Umfangsrichtung (unmittelbar) folgenden und damit benachbarten Mischluftloch eines in Umfangsrichtung angrenzenden Wandsegments. In Umfangsrichtung zueinander benachbarte Mischluftlöcher aneinander angrenzender Wandsegmente sind hier folglich näher zueinander positioniert als in Umfangsrichtung aufeinander folgende Mischluftlöcher derselben Reihe eines Wandsegments. An einer Segmentgrenze zwischen aneinander angrenzenden Wandsegmenten der inneren oder äußeren Brennkammerwand weisen dann folglich Mischluftlöcher in Umfangsrichtung einen geringeren Abstand auf als innerhalb einer Reihe eines Wandsegments. In einem durch ein Wandsegment definierten Bereich der inneren oder äußeren Brennkammerwand, der sich in Achsrichtung stromab eines Düsenkopfs einer Treibstoffdüse anschließt, ist somit innerhalb einer Reihe ein größerer Abstand zwischen den Mischluftlöchern vorgesehen als jeweils an einem durch eine Segmentgrenze definierten Randbereich. Die entsprechend über eine solche Mischluftanordnung im Betrieb des Triebwerks vorgegebenen Mischluftströmungen können an den Randbereichen für eine stärkere Lokalisierung der Mischluft stromab des Düsenkopfes bei gleichzeitig verbesserter Vergleichmäßigung der Temperatur auch an den Randbereichen sorgen.

Beispielsweise ist der Abstand zwischen dem einen Mischluftloch (dessen Mittelpunkt an einem Eckpunkt des ersten oder zweiten Dreiecks vorgesehen ist) und dem mindestens einen weiteren Mischluftloch eines Wandsegments doppelt so groß wie der Abstand des mindestens einen weiteren Mischluftloch zu dem in Umfangsrichtung folgenden Mischluftloch des angrenzenden (nächsten) Wandsegments der inneren oder äußeren Brennkammerwand.

Insbesondere kann der Abstand zwischen dem einen Mischluftloch und dem weiteren, nicht an einem Eckpunkt eines jeweiligen ersten oder zweiten Dreiecks liegenden Mischluftlochs derselben (bezogen auf die Achsrichtung vorderen oder hinteren) Reihe an dem jeweiligen ersten oder zweiten Wandsegment in Abhängigkeit von einer Seitenlänge des jeweiligen Dreiecks definiert sein. So hat es sich beispielsweise für bestimmte Brennraumgeometrien und -dimensionen als vorteilhaft erwiesen, wenn dieser Abstand bei über ein gleichschenkliges erstes oder zweites Dreieck positionierten Mischluftlöchern eines Wandsegments der Länge der Basis des jeweiligen gleichschenkligen Dreiecks entspricht. Insbesondere bei einer derartigen Beabstandung kann über eine seitlich einströmende Mischluftströmung effektiv(er) erreicht werden, dass heiße Gasströmungen stärker abgekühlt und zumindest teilweise in Richtung eines zentralen Bereichs stromab eines Düsenkopfes einer Treibstoffdüse gedrückt werden.

In einer Ausführungsvariante ist vorgesehen, dass im Bereich der Segmentgrenzen die Mischluftlöcher zweier aneinander angrenzender Wandsegmente zu den Mischluftlöchern zweier gegenüberliegender, aneinander angrenzender Wandsegmente der anderen Brennkammerwand axial zueinander versetzt vorgesehen sind. Das heißt zum Bespiel, dass zwei Mischluftlöchern, die an einer Segmentgrenze in Umfangsrichtung aufeinanderfolgen, an dem gegenüberliegenden Paar von Wandsegmenten keine Mischluftlöcher gegenüberliegen. Während dann also beispielsweise in Verlängerung einer vorderen Reihe an der inneren Brennkammerwand zwei Mischluftlöcher zweier benachbarter Wandsegmente mit vergleichsweise geringem Abstand aufeinander folgen, sind in Verlängerung einer vorderen Reihe der äußeren Brennkammerwand im Bereich der gegenüberliegenden Segmentgrenze keine Mischluftlöcher vorgesehen. Stattdessen sind an der äußeren Brennkammerwand in Verlängerung einer hinteren Reihe zwei Mischluftlöcher an zwei benachbarten Wandsegmenten vorgesehen, während gegenüberliegend in Verlängerung einer hinteren Reihe der inneren Brennkammerwand keine Mischluftlöcher vorgesehen sind.

In einer Ausführungsvariante sind je Wandsegment in zwei in Achsrichtung aufeinander folgenden Reihen (und damit gegebenenfalls an dem Wandsegment überhaupt) insgesamt lediglich genau fünf Mischluftlöcher vorgesehen. Drei Mischluftlöcher sind somit jeweils an den Eckpunkten des jeweiligen ersten oder zweiten virtuellen Dreiecks positioniert, während zusätzlich zwei weitere Mischluftlöcher in einer anderen Reihe vorgesehen sind. Hierbei können die Mischluftlöcher, die an aneinander gegenüberliegenden ersten und zweiten Wandsegmenten vorgesehen sind, zueinander axial versetzt sein, sodass einem Mischluftloch eines ersten Wandsegments stets nur ein Wandabschnitt des anderen Wandsegments ohne Mischluftloch gegenüberliegt.

Mit Blick auf eine möglichst gleichmäßige Temperaturverteilung in einem gebildeten Treibstoff-Luft-Gemisch und eine möglichst große Durchmischung mithilfe der einströmenden Mischluft kann es gerade im Zusammenhang mit der vorgeschlagenen Mischluftlochanordnungen ferner von Vorteil sein, die Abstände der Reihen von Mischluftlöchern an einem Wandsegment in Bezug zu einem Abstand zwischen den Brennkammerwänden vorzugeben. So hat sich beispielsweise gezeigt, dass ein (in Achsrichtung gemessener) axialer Abstand zwischen zwei Reihen von Mischluftlöchern an einem Wandsegment in einem Bereich von 0,05d bis 0,4d von Vorteil ist, wobei d den Abstand zwischen den ersten und zweiten gegenüberliegenden Wandsegmenten der inneren und äußeren Brennkammerwände definiert. Ein axialer Reihenabstand ist somit einem (Wand-)Abstand d in Relation gesetzt. Reihenabstand und Wandabstand stehen somit in einem bestimmten Verhältnis zueinander, wobei der Reihenabstand der Mischluftlöcher in einer spezifischen Art und Weise vom Wandabstand abhängig gemacht ist. Hierüber lässt sich dann insbesondere bei einer Brennkammer mit vergleichsweise großem Pitch-Höhen-Verhältnis eine kompakte lokale Mischzone stromab einer Treibstoffdüse einstellen.

Ein weiterer Aspekt der vorgeschlagenen Lösung betrifft die Bereitstellung eines Triebwerks, insbesondere eines Gasturbinentriebwerks und hier insbesondere eines Turbofan-Triebwerks mit einer Ausführungsvariante einer vorgeschlagenen Brennkammerbaugruppe.

Die beigefügten Figuren veranschaulichen exemplarisch mögliche Ausführungsvarianten der vorgeschlagenen Lösung.

Hierbei zeigen:

Figur 1    ausschnittsweise und in perspektivischer Ansicht einen Teil einer Ausführungsvariante einer vorgeschlagenen Brennkammerbaugruppe mit spezifischen Mischluftlochanordnungen an inneren und äußeren Brennkammerwänden stromab eines Düsenkopfes einer Treibstoffdüse;

Figur 2    die Mischluftlochanordnung an den inneren und äußeren Brennkammerwänden der Brennkammerbaugruppe der Figur 1 in Draufsicht;

Figur 3    einen Teil der Brennkammerbaugruppe der Figuren 1 und 2 in einem Querschnitt;

Figur 4A    eine schematische Schnittdarstellung eines Gasturbinentriebwerks, in dem eine vorgeschlagene Brennkammerbaugruppe zum Einsatz kommt;

Figur 4B      eine schematische Schnittdarstellung einer Brennkammer des Gasturbinentriebwerks der Figur 4A;

Figur 4C      ausschnittsweise eine vergrößerte Schnittdarstellung einer Brennkammer mit Brennkammerschindel.

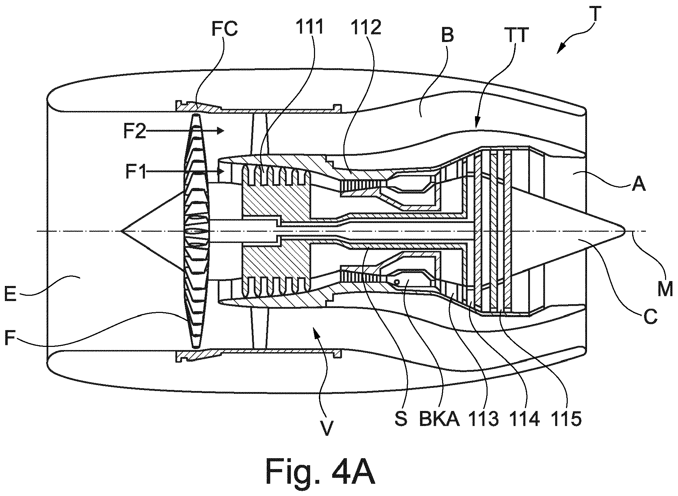

Die Figur 4A veranschaulicht schematisch und in Schnittdarstellung ein (Turbofan-) Triebwerk T, bei dem die einzelnen Triebwerkskomponenten entlang einer Rotationsachse oder Mittelachse M hintereinander angeordnet sind und das Triebwerk T als Turbofan-Triebwerk ausgebildet ist. An einem Einlass oder Intake E des Triebwerks T wird Luft entlang einer Eintrittsrichtung mittels eines Fans F angesaugt. Dieser in einem Fangehäuse FC angeordnete Fan F wird über eine Rotorwelle S angetrieben, die von einer Turbine TT des Triebwerks T in Drehung versetzt wird. Die Turbine TT schließt sich hierbei an einen Verdichter V an, der beispielsweise einen Niederdruckverdichter 111 und einen Hochdruckverdichter 112 aufweist, sowie gegebenenfalls noch einen Mitteldruckverdichter. Der Fan F führt einerseits in einem Primärluftstrom F1 dem Verdichter V Luft zu sowie andererseits, zur Erzeugung des Schubs, in einem Sekundärluftstrom F2 einem Sekundärstromkanal oder Bypasskanal B. Der Bypasskanal B verläuft hierbei um ein den Verdichter V und die Turbine TT umfassendes Kerntriebwerk, das einen Primärstromkanal für die durch den Fan F dem Kerntriebwerk zugeführte Luft umfasst.

Die über den Verdichter V in den Primärstromkanal geförderte Luft gelangt in eine Brennkammer BK des Kerntriebwerks, in dem die Antriebsenergie zum Antreiben der Turbine TT erzeugt wird. Die Turbine TT weist hierfür eine Hochdruckturbine 113, eine Mitteldruckturbine 114 und einen Niederdruckturbine 115 auf. Die Turbine TT treibt dabei über die bei der Verbrennung frei werdende Energie die Rotorwelle S und damit den Fan F an, um über die die in den Bypasskanal B geförderte Luft den erforderlichen Schub zu erzeugen. Sowohl die Luft aus dem Bypasskanal B als auch die Abgase aus dem Primärstromkanal des Kerntriebwerks strömen über einen Auslass A am Ende des Triebwerks T aus. Der Auslass A weist hierbei üblicherweise eine Schubdüse mit einem zentral angeordneten Austrittskonus C auf.

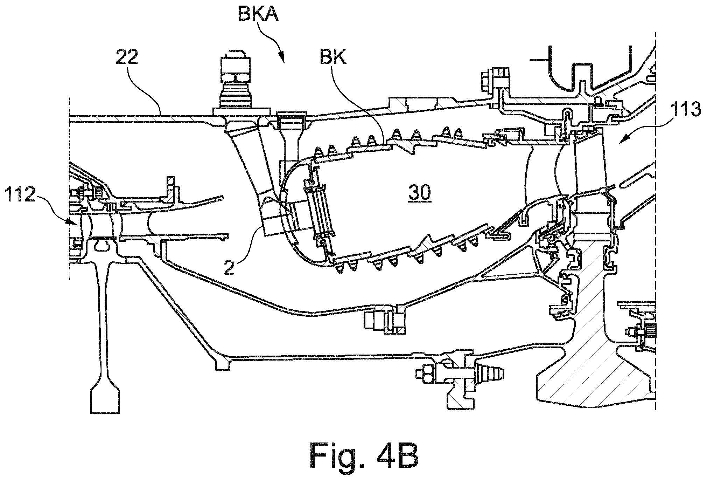

Figur 4B zeigt einen Längsschnitt durch die Brennkammer BK des Triebwerks T. Die Brennkammer BK ist hier als eine Ringbrennkammer ausgebildet, die einen Teil einer Ausführungsvariante einer vorgeschlagenen Brennkammerbaugruppe bildet. Zur Einspritzung von Kraftstoff respektive eines Luft-Kraftstoff-Gemisches in einen Brennraum 30 der Brennkammer BK ist eine Düsenbaugruppe vorgesehen. Diese umfasst einen Brennkammerring, an dem entlang einer Kreislinie um die Mittelachse M mehrere Treibstoffdüsen 2 angeordnet sind. Hierbei sind an dem Brennkammerring die Düsenaustrittsöffnungen der jeweiligen Treibstoffdüsen 2 vorgesehen, die innerhalb der Brennkammer BK liegen. Jede Treibstoffdüse 2 umfasst dabei einen Flansch, über den eine Treibstoffdüse 2 an ein Außengehäuse 22 geschraubt ist.

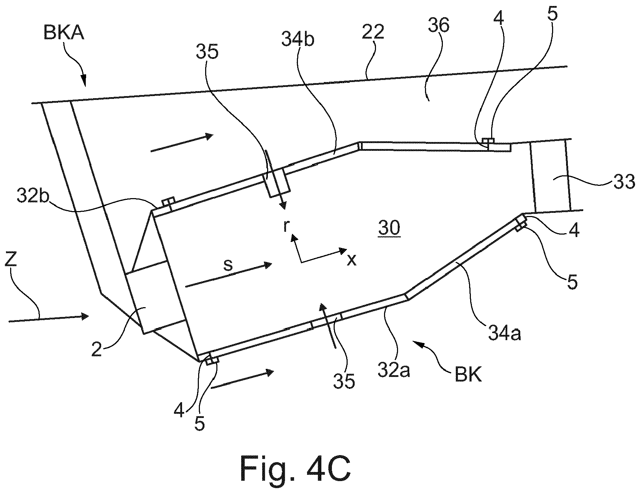

In der vergrößerten Schnittdarstellung der Figur 4C ist eine Ausgestaltung der Brennkammer BK näher dargestellt. Die Brennkammer BK umfasst hierbei die Treibstoffdüse 2, welche in einem Brennkammerkopf gehalten ist. Über die Treibstoffdüse 2 wird Treibstoff in den Brennraum 30 der Brennkammer BK eingespritzt. Die Abgase des innerhalb des Brennraums 30 entzündeten Gemisches gelangen in einer Achsrichtung x über eine Turbinenvorleitreihe 33 zu der Hochdruckturbine 113, um die Turbinenstufen in Drehung zu versetzen. Die Brennkammer BK erstreckt sich somit in der Achsrichtung x von einem ersten axialen Ende mit einem Brennkammerkopf zu einem zweiten axialen Ende, an dem die bei der Verbrennung in dem Brennraum 30 entstehende Abgase zu der Hochdruckturbine 113 für die Erzeugung von Schub geleitet werden.

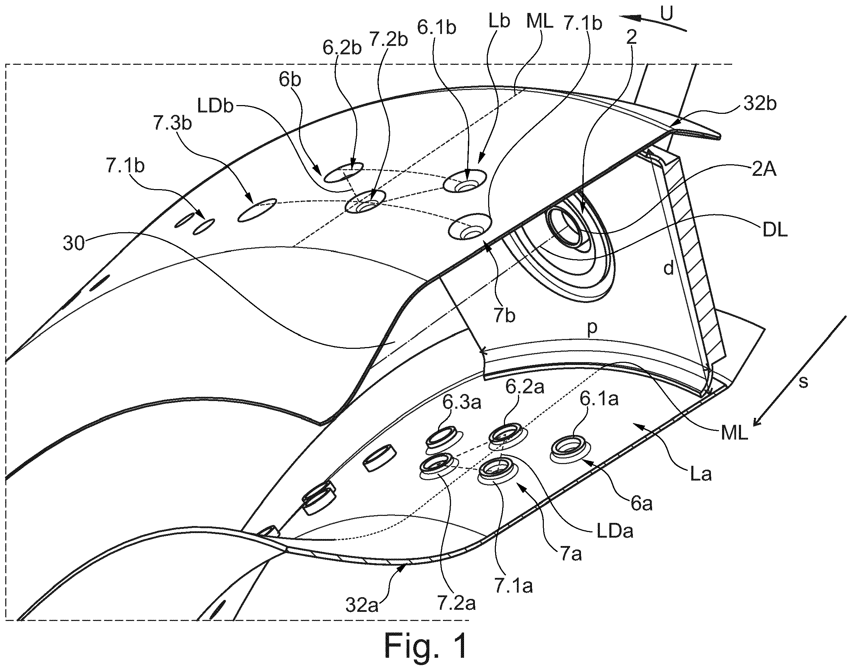

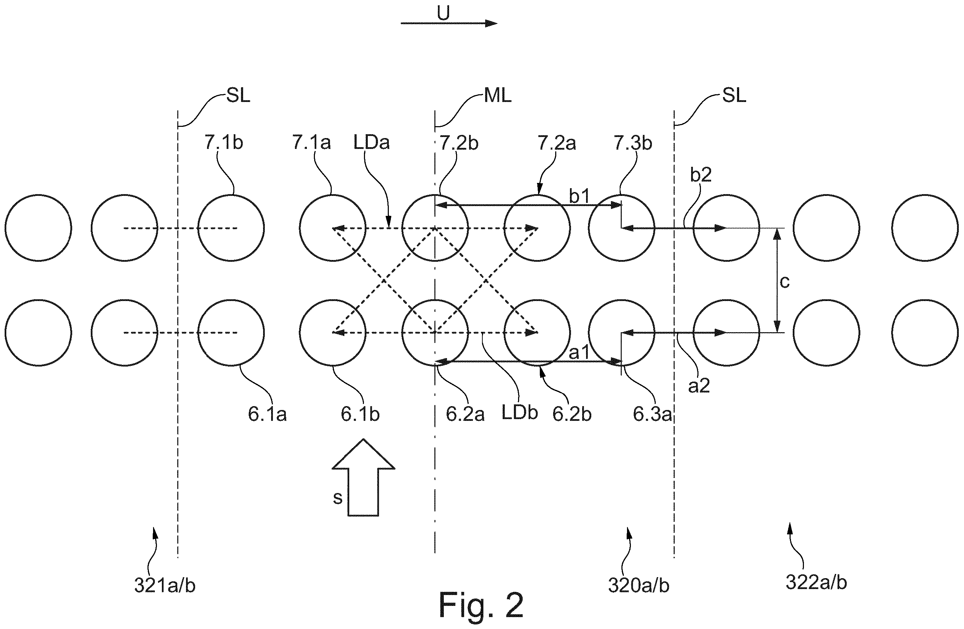

Der Brennraum 30 ist durch eine - bezogen auf die Mittelachse M des Triebwerks T -radial innere und radial äußere Brennkammerwände 32a, 32b eines Brennkammergehäuses der Brennkammer BK begrenzt, die sich jeweils einerseits entlang der Achsrichtung x und andererseits entlang einer Umfangsrichtung U (vgl. Figuren 1 und 2) um diese Achsrichtung x herum erstrecken. Die Brennkammerwände 32a und 32b erstrecken sich somit einerseits entlang der Achsrichtung x entlang der Mittelachse M und entlang der Umfangsrichtung U. Senkrecht sowohl zur Achsrichtung x als auch zur Umfangsrichtung verläuft eine Radialrichtung r. Entlang dieser Radialrichtung r strömt beispielsweise Luft über Mischluftlöcher 35 in den Brennraum 3.

An den Brennkammerwänden 32a, 32b sind innenseitig Brennkammerschindeln 34a, 34b angeordnet sind. Die Brennkammerwände 32a, 32b umschließen somit den Brennraum 30 der Brennkammer BK und tragen die Brennkammerschindeln 34a, 34b, mit denen die Brennkammerwände 32a, 32b ausgekleidet sind, um eine zusätzliche Kühlung zu ermöglichen und den innerhalb des Brennraumes 30 herrschenden hohen Temperaturen standzuhalten.

Die Brennkammerschindeln 34a, 34b sind hier jeweils über einen oder mehrere Bolzen 4 an der jeweiligen inneren oder äußeren Brennkammerwand 32a, 32b gehalten. Jeder Bolzen 4 durchgreift hierbei eine Öffnung an der Brennkammerwand 32a oder 32b und ist an der Brennkammerwand 32a oder 32b über jeweils eine Mutter 5 fixiert. Zum Beispiel ist über mehrere an einer Brennkammerschindel 34a oder 34b vorgesehene Effusionskühllöcher eine Kühlung der jeweiligen Brennkammerschindel 34a oder 34b ermöglicht. Zudem kann eine Brennkammerschindel 34a, 34b wenigstens ein Zumischloch aufweisen, über das Luft aus einem umgebenden Außenraum in den Brennraum 30 einströmen kann. Die über ein Zumischloch strömende Luft dient dabei dem Abkühlen und/oder dem Abmagern der Verbrennung.

Der die Brennkammer BK umgebende Außenraum, zum Beispiel in Form eines Ringkanals, bildet eine Luftzuführung 36 für die Mischluftlöcher 35 (und etwaige Effusionskühllöcher) aus. Entlang einer Zuströmrichtung Z in die Brennkammer BK einströmende Luft wird hierbei an dem ersten axialen Ende im Bereich der Treibstoffdüse 2 über einen haubenartig ausgestalteten Abschnitt in einen primären Luftstrom für den Brennraum 30 und einen sekundären Luftstrom für den umgebenden Außenraum mit der Luftzuführung 36 aufgeteilt. Die Luft strömt hierbei üblicherweise über einen Diffusor (nicht dargestellt) in die Brennkammer BK ein.

Die Figuren 1, 2 und 3 zeigen mit größerem Detaillierungsgrad Ausführungsvarianten der vorgeschlagenen Lösung, zur Veranschaulichung spezieller Anordnungen für die Mischluftlöcher 35 an den inneren und äußeren Brennkammerwänden 32a und 32b. Hierbei sind die Mischluftlöcher mit 6.1a-6.3a, 7.1a-7.2a und 6.1b-6.2b, 7.1b-7.3b bezeichnet und in bestimmten sich segmentweise in Umfangsrichtung U wiederholenden Mustern an den inneren und äußeren Brennkammerwänden 32a und 32b vorgesehen. Die Positionen der Mischluftlöcher 6.1a-6.3a, 7.1a-7.2a und 6.1b-6.2b, 7.1b-7.3b sind ferner aufeinander abgestimmt, sodass sich insbesondere bei einem Brennraum 30 mit einem vergleichsweise großen Pitch-Höhen-Verhältnis eine besonders vorteilhafte Mischluftströmung stromab einer Treibstoffdüse 2 ergibt.

Die Figur 1 zeigt dabei perspektivisch einen Ausschnitt des Brennraums 30 mit Blick auf das vordere axiale, stirnseitige Ende mit einem Segment eines ringförmigen Hitzeschilds, an dessen Öffnung ein Düsenkopf 2A der Treibstoffdüse 2 in den Brennraum 30 ragt, um Treibstoff in den Brennraum 30 einzudüsen. Die Höhe des Brennraums 30 ist durch einen Abstand d zwischen den sich gegenüberliegenden Brennkammerwänden 32a und 32b an dem ersten axialen Ende im Bereich des Düsenkopfes 2A definiert, der der Höhe des Hitzeschildsegments entspricht. Der Pitch des Brennraums ist wiederum durch eine Breite p definiert, die das den Düsenkopf 2A tragende Hitzeschildsegment und damit auch ein jeweiliges Segment der inneren und äußeren Brennkammerwand 32a, 32b in Umfangsrichtung U misst.

Die innere Brennkammerwand 32a und die äußere Brennkammerwand 32b lassen sich vorliegend (virtuell) in einzelne in Umfangsrichtung U aufeinanderfolgende Wandsegmente unterteilen, an denen jeweils wiederkehrende Muster für die hieran vorgesehenen Mischluftlöcher vorgegeben sind. Je Wandsegment sind dabei vorliegend jeweils fünf Mischluftlöcher 6.1a-6.3a, 7.1a-7.2a oder 6.1b-6.2b, 7.1b-7.3b vorgesehen. Die Mischluftlöcher an einem jeweiligen Wandsegment sind symmetrisch zu einer Symmetrieachse ML an dem jeweiligen Wandsegment vorgesehen. Dieser Symmetrieachse ML verläuft parallel zu einer Düsenachse DL, entlang der sich der Düsenkopf 2A der Treibstoffdüse 2 erstreckt und die damit der Hauptströmungsrichtung von Treibstoff aus dem Düsenkopf 2A in Richtung des Brennraumausgangs entspricht.

An jedem Wandsegment der inneren oder äußeren Brennkammerwand 32a, 32b ist eine Mischluftlochanordnung La oder Lb für die jeweiligen fünf Mischluftlöcher 6.1a-6.3a, 7.1a-7.2a oder 6.1b-6.2b, 7.1b-7.3b vorgesehen. Jede Mischluftlochanordnung La, Lb weist dabei genau zwei Reihen 6a, 7a oder 6b, 7b von Mischluftlöchern auf. Die fünf Mischluftlöcher 6.1b-6.2b, 7.1b-7.3b der äußeren Brennkammerwand 32b sind dabei jeweils segmentweise invers zu den Mischluftlöchern 6.1a-6.3a, 7.1a-7.2a der inneren Brennkammerwand 32a angeordnet. Insbesondere sind an einem Wandsegment der inneren Brennkammerwand 32a drei Mischluftlöcher 6.2a, 7.1a und 7.2a mit ihren Mittelpunkten an Eckpunkten eines virtuellen ersten gleichseitigen Dreiecks LDa angeordnet, wobei die Spitze dieses ersten gleichschenkligen Dreiecks LDa und damit der Mittelpunkt des Mischluftlochs 6.2a der vorderen Reihe 6a auf der Symmetrieachse ML liegt.

Um 180° gedreht zu dem ersten gleichschenkligen Dreiecks LDa ist an dem gegenüberliegenden Wandsegment der äußeren Brennkammerwand 32b ein zweites gleichschenkliges Dreiecks LDb vorgesehen, an dessen Eckpunkten die Mittelpunkte der drei Mischluftlöcher 6.1b, 6.2b und 7.2b liegen. Diese drei Mischluftlöcher 6.1b, 6.2b und 7.2b des Wandsegment der äußeren Brennkammerwand 32b und die drei Mischluftlöcher 6.2a, 7.1a und 7.2a des Wandsegments der inneren Brennkammerwand 32a sind derart invers positioniert, sodass einem Mischluftloch der inneren Brennkammerwand 32a kein Mischluftloch der gegenüberliegenden, äußeren Brennkammerwand 32b gegenüberliegt. Stromab des Düsenkopfes 2A werden somit sechs zueinander räumlich versetzte Mischluftströme erzeugt. Die Erzeugung lokal separierter Mischluftströmungen auf einem vergleichsweise kompakten Raum stromab des Düsenkopfes 2A über die Gruppen von Mischluftlöchern 6.2a, 7.1a, 7.2a und 6.1b, 6.2b und 7.2b hat sich dabei für eine effiziente Durchmischung von Treibstoff und Mischluft bei einem Brennraum 30 mit vergleichsweise großen Pitch-Höhen-Verhältnis p/d als besonders vorteilhaft verwiesen.

Die Figur 2 verdeutlicht hierbei die Mischluftlochanordnungen La, Lb über mehrere Wandsegmente der inneren und äußeren Brennkammerwände 32a, 32b hinweg. Die Figur 2 zeigt dabei eine Draufsicht mit einer Blickrichtung senkrecht zu der Umfangsrichtung U und senkrecht zu der Hauptströmungsrichtung s und damit senkrecht zu der Achsrichtung x.

In der Figur 2 sind ausschnittsweise drei nebeneinanderliegende Wandsegmente 321b, 320b und 322b der äußeren Brennkammerwand 32b und die zugehörigen gegenüberliegenden Wandsegmente 321a, 320a, 322a der inneren Brennkammerwand 32a dargestellt. Durch (virtuelle) Segmentgrenzlinien SL sind Wandsegmente einer Brennkammerwand 32a, 32b paarweise voneinander getrennt. Die Mischluftanordnungen La respektive Lb der Wandsegmente 321b, 320b, 322b und 321a, 320a und 322a sind an einem Wandsegment 320a/b, 321a/b oder 322a/b jeweils achssymmetrisch zu der Symmetrieachse L. Ferner ist ein Mischluftanordnung La oder Lb eines Wandsegments jeweils zu einem gegenüberliegenden Wandsegment der anderen Brennkammerwand 32a, 32b invers.

In der Draufsicht der Figur 2 sind entlang der Symmetrieachse ML ein erstes Mischluftloch 6.2a der vorderen Reihe 6a eines ersten Wandsegments 320a (der inneren Brennkammerwand 32a) und ein erstes Mischluftloch 7.2b der hinteren Reihe 7b eines zweiten Wandsegments 320b (der äußeren Brennkammerwand 32b) hintereinander vorgesehen. Diese ersten Mischluftlöchern 6.2a, 7.2b sind somit leidglich in Achsrichtung x und damit der Hauptströmungsrichtung s des über den Düsenkopf 2A eingedüsten Treibstoffs axial versetzt angeordnet. Diese beiden ersten Mischluftlöcher 6.2a und 7.2b sind dabei an einer Spitze des jeweiligen virtuellen gleichschenkligen Dreiecks LDa oder LDb angeordnet, die die räumliche Anordnung der zentralen drei Mischluftlöcher (von insgesamt fünf Mischluftlöcher) an einem jeweiligen Wandsegment 320a oder 320b vorgegeben. Dementsprechend sind an dem Wandsegment 320a der inneren Brennkammerwand 32a in der hinteren Reihe 7a zwei Mischluftlöcher 7.1a und 7.2a vorgesehen, deren Mittelpunkte an den anderen Eckpunkten des ersten virtuellen Dreiecks LDa liegen und die damit mit einem Abstand a1 zueinander beabstandet sind, der der Länge der Basis des virtuellen ersten Dreiecks LDa entspricht. Invers hierzu sind an der vorderen Reihe 6b des Wandsegments 320b der äußeren Brennkammerwand 32b Mischluftlöcher 6.1b und 6.2b vorgesehen, die mit ihren Mittelpunkten an den Eckpunkten des anderen, zweiten virtuellen Dreiecks LDb liegen. Diese Mittelpunkte sind einem Abstand b1 zueinander vorgesehen, der der Länge der Basis des virtuellen zweiten Dreiecks LDb entspricht (wobei vorliegend a1 = b1 gilt).

In einer jeweiligen vorderen oder hinteren Reihe 6a oder 7b der zwei in Achsrichtung x aufeinander folgenden Reihen von Mischluftlöchern, an der an dem jeweiligen Wandsegment 320a oder 320b ein auf der Symmetrieachse ML liegendes Mischluftloch 6.2a oder 7.2b vorgesehen ist, sind in Umfangsrichtung U jeweils die zwei weiteren Mischluftlöcher 6.1a, 6.3a oder 7.1b, 7.3b angeordnet. In der jeweiligen anderen Reihe 7a bzw. 6b bleibt es demgegenüber bei den zwei Mischluftlöchern, deren Mittelpunkte auf den Eckpunkten des jeweiligen virtuellen Dreiecks LDa, LDb liegen.

Die zusätzlichen (vierten und fünften) Mischluftlöcher 6.1a, 6.3a der vorderen Reihe 6a an dem Wandsegment 320a oder die zusätzlichen (vierten und fünften) Mischluftlöcher 7.1b, 7.3b der hinteren Reihe 7b an dem Wandsegment 320b sind jeweils zu dem jeweiligen zentralen Mischluftloch 6.2a oder 7.3b der jeweiligen Reihe 6a oder 7b in einem Abstand vorgesehen, der ebenfalls der Länge der Basis des jeweiligen virtuellen Dreiecks LDa oder LDb entspricht.

An eine Reihe 6a oder 7b mit drei Mischluftlöchern 6.1a-6.3a oder 7.1b-7.3b schließt sich in Umfangsrichtung U in einem Abstand a2 oder b2 jeweils ein Mischluftloch eines Nachbarsegments 322a oder 322b an. Dieser Abstand a2 oder b2 entspricht dabei vorliegend der Hälfte der Länge der Basis des jeweiligen virtuellen Dreiecks LDa, LDb und damit der Hälfte des Abstands a1 oder b1. In einer jeweiligen anderen Reihe 7a oder 6b desselben Wandsegments 320a oder 320b, in der genau zwei Mischluftlöcher 7.1a, 7.2a oder 6.1b, 6.2b vorgesehen sind, folgt in Umfangsrichtung U erst mit größerem Abstand an einem Nachbarsegment 322a oder 322b ein neues Mischluftloch. Bei der dargestellten Ausführungsvariante ist hier beispielsweise ein Abstand von $\frac{3}{2}a1$ oder $\frac{3}{2}b1$ vorgesehen. Damit ergibt sich zumindest für eine Gruppe von in Umfangsrichtung U aufeinanderfolgende Reihen 6a, 7b benachbarter Wandsegmente 321a/b, 320a/b, 322a/b eine lokale Verdichtung von Mischluftlöchern im Bereich der Segmentgrenzen SL mit einer hierzu axial versetzten Häufung von Mischluftlöchern an der jeweiligen anderen Brennkammerwand. Dies ist ebenfalls für eine Vergleichmäßigung der Temperatur des entstehenden Treibstoff-Luft-Gemischs über die Segmentgrenzen SL hinweg förderlich.

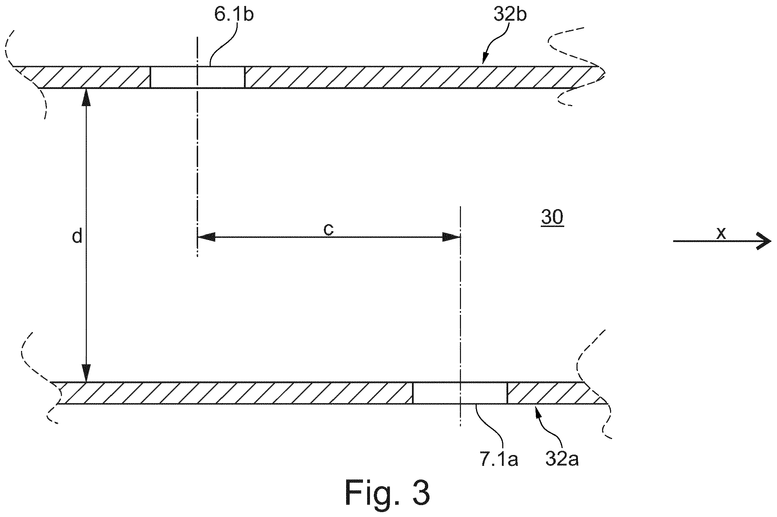

Die zwei Reihen der Wandsegmente 321a/b, 320a/b und 322a/b sind jeweils in einem axialen Reihenabstand c zueinander vorgesehen. Dieser Reihenabstand c ist dabei bezüglich des Wandabstands d vorgegeben. So soll für den Reihenabstand c gelten, dass dieser im Bereich von 0,05d bis 0,4d liegt. Wie anhand der Schnittdarstellung der Figur 3 veranschaulicht ist, liegen damit zueinander axial versetzte Mischluftlöcher der äußeren und inneren Brennkammerwände 320a, 320b in vergleichsweise geringem Abstand zueinander vor. Dies führt in Kombination mit der sich segmentweise wiederholenden inversen Anordnung der Mischluftanordnungen La, Lb gerade bei dem hier dargestellten vergleichsweise großen Pitch-Höhen-Verhältnis p/d zu einer äußerst effizienten Mischung des an dem Düsenkopf 2A jeweils eingespritzten Treibstoffs mit zugeführter Mischluft bei vergleichsweise gleichmäßiger Temperaturverteilung am Brennkammeraustritt. Vergleichsweise geringe NOx-Emissionen bei der Verbrennung des Treibstoff-LuftGemisches sind die Folge.

**Bezugszeichenliste**

| | |
|---|---|
| 111 | Niederdruckverdichter |
| 112 | Hochdruckverdichter |

| | |
|---|---|
| 113 | Hochdruckturbine |
| 114 | Mitteldruckturbine |
| 115 | Niederdruckturbine |
| 2 | Treibstoffdüse |
| 2A | Düsenkopf |
| 22 | Außengehäuse |
| 30 | Brennraum |
| 32a, 32b | Innere/äußere Brennkammerwand |
| 320a, 320b | Segment |
| 321a, 321b, 322a, 322b | Nachbarsegment |
| 33 | Turbinenvorleitreihe |
| 34a, 34b | Innere/äußere Brennkammerschindel |
| 35 | Mischluftloch |
| 36 | Luftzuführung |
| 4 | Bolzen |
| 5 | Mutter |
| 6.1a, 6.2a, 6.3a 6.1b, 6.2b | Mischluftloch |
| 6a, 6b | 1. Mischluftlochreihe |
| 7.1a, 7.2a, 7.1b, 7.2b, 7.3b | Mischluftloch |
| 7a, 7b | 2. Mischluftlochreihe |
| A | Auslass |
| a1, a2, b1, b2 | Abstand |
| B | Bypasskanal |
| BK | Brennkammer |
| c | axialer Reihenabstand |
| C | Austrittskonus |
| d | Wandabstand |
| DL | Düsenachse |
| E | Einlass / Intake |
| F | Fan |
| F1, F2 | Fluidstrom |
| FC | Fangehäuse |
| La, Lb | Mischluftlochanordnung |
| LDa, LDb | Dreieck |
| M | Mittelachse / Rotationsachse |
| ML | Symmetrieachse |
| p | Breite / Pitch |
| r | Radialrichtung |
| R | Fertigungsrichtung |
| S | Rotorwelle |
| s | Hauptströmungsrichtung |
| SL | Segmentgrenzlinie |
| T | (Turbofan-)Triebwerk |
| TT | Turbine |
| U | Umfangsrichtung |
| V | Verdichter |
| x | Achsrichtung |
| Z | Zuströmrichtung |

**Patentansprüche**

1. Brennkammerbaugruppe, mit einer Brennkammer (BK) für ein Triebwerk (T), die innere und äußere Brennkammerwände (32a, 32b) zur Berandung eines Brennraums (30) der Brennkammer (BK) umfasst, wobei

    - sich der Brennraum (30) entlang einer Mittelachse (M) in einer Achsrichtung (x) von einem ersten axialen Ende zu einem zweiten axialen Ende erstreckt,
    - sowohl an der inneren Brennkammerwand (32a) als auch an der äußeren Brennkammerwand (32b) wenigstens

8

zwei in Achsrichtung (x) aufeinanderfolgende Reihen (6a, 7a; 6b, 7b) von Mischluftlöchern (6.1a-6.3a, 7.1a-7.2a; 6.1b-6.2b, 7.1b-7.3b) vorgesehen sind, die für das Leiten von Mischluft in den Brennraum (30) vorgesehen sind,

- in einer Reihe (6a, 7a; 6b, 7b) von Mischluftlöchern (6.1a-6.3a, 7.1a-7.2a; 6.1b-6.2b, 7.1b-7.3b) entlang einer Umfangsrichtung (U) um die Mittelachse (M) jeweils mehrere Mischluftlöcher (6.1a-6.3a, 7.1a-7.2a; 6.1b-6.2b, 7.1b-7.3b) hintereinander angeordnet sind und

- sowohl die innere Brennkammerwand (32a) als auch die äußere Brennkammerwand (32b) in Umfangsrichtung (U) jeweils in Wandsegmente (320a/b, 321a/b, 322a/b) unterteilt sind, an denen die Mischluftlöcher (6.1a-6.3a, 7.1a-7.2a; 6.1b-6.2b, 7.1b-7.3b) jeweils in einem vorgegebenen Muster angeordnet sind,

**dadurch gekennzeichnet, dass**

- an einem ersten Wandsegment (320a) der inneren Brennkammerwand (32a) drei Mischluftlöcher (6.1a-6.3a, 7.1a-7.2a) zweier in Achsrichtung (x) aufeinanderfolgender Reihen (6a, 7a) mit ihren jeweiligen Mittelpunkten an Eckpunkten eines virtuellen ersten Dreiecks (LDa) angeordnet sind,

- an einem zweiten Wandsegment (320b) der äußeren Brennkammerwand (32b), das dem ersten Wandsegment (320a) gegenüberliegt, drei Mischluftlöcher (6.1b-6.2b, 7.1b-7.3b) zweier in Achsrichtung (x) aufeinanderfolgender Reihen (6a, 7a) mit ihren jeweiligen Mittelpunkten an Eckpunkten eines virtuellen zweiten Dreiecks (LDa) angeordnet sind, und

- das zweite Dreieck (LDb) zu dem ersten Dreieck (LDa) um 180° gedreht ausgerichtet und die Mischluftlöcher in den Reihen (6a, 7a; 6b, 7b) an den ersten und zweiten Wandsegmenten (320a/b) derart zueinander angeordnet sind, dass die an den Eckpunkten der ersten und zweiten Dreiecke (LDa) angeordneten Mischluftlöcher (6.1a-6.3a, 7.1a-7.2a; 6.1b-6.2b, 7.1b-7.3b) der ersten und zweiten Wandsegmente (320a/b) jeweils keinem Mischluftloch des zweiten oder ersten Wandsegments (320b/a) gegenüberliegen.

2. Brennkammerbaugruppe nach Anspruch 1, **dadurch gekennzeichnet, dass** das erste Dreieck (LDa) und das zweite Dreieck (LDb) jeweils gleichschenklig sind.

3. Brennkammerbaugruppe nach Anspruch 2, **dadurch gekennzeichnet, dass** die Spitze des ersten gleichschenkligen Dreiecks (LDa) und die Spitze des zweiten gleichschenkligen Dreiecks (LDb) in einer Draufsicht entlang einer Blickrichtung, die senkrecht zu der Achsrichtung (x) und senkrecht zu der Umfangsrichtung (U) verläuft, auf einer Symmetrieachse (ML) liegen, zu der, in der Draufsicht, ein erstes Muster der Mischluftlöcher (6.1a-6.3a, 7.1a-7.2a) an dem ersten Wandsegment (320a) symmetrisch ist und zu der, in der Draufsicht, ein zweites Muster der Mischluftlöcher (6.1b-6.2b, 7.1b-7.3b) an dem zweiten Wandsegment (320b) symmetrisch ist.

4. Brennkammerbaugruppe nach Anspruch 3, **dadurch gekennzeichnet, dass** die Symmetrieachse (ML) zu einer Düsenachse (DL) parallel verläuft, entlang der sich ein Düsenkopf (2A) einer zum Einspritzen von Treibstoff in den Brennraum (30) vorgesehenen Treibstoffdüse (2) der Brennkammerbaugruppe erstreckt.

5. Brennkammerbaugruppe nach einem der Ansprüche 2 bis 4, **dadurch gekennzeichnet, dass** das erste gleichschenklige Dreieck (LDa) und das zweite gleichschenklige Dreieck (LDb) identisch sind.

6. Brennkammerbaugruppe nach einem der vorhergehenden Ansprüche, **dadurch gekennzeichnet, dass** an dem ersten Wandsegment (320a) in wenigstens einer Reihe (6a), in der ein Mischluftloch (6.2a) vorgesehen ist, dessen Mittelpunkt an einem Eckpunkt des ersten Dreiecks (LDa) liegt, mindestens ein weiteres Mischluftloch (6.3a) vorgesehen ist.

7. Brennkammerbaugruppe nach einem der vorhergehenden Ansprüche, **dadurch gekennzeichnet, dass** an dem zweiten Wandsegment (320a) in wenigstens einer Reihe (7b), in der ein Mischluftloch (7.2b) vorgesehen ist, dessen Mittelpunkt an einem Eckpunkt des zweiten Dreiecks (LDb) liegt, mindestens ein weiteres Mischluftloch (7.3b) vorgesehen ist.

8. Brennkammerbaugruppe nach Anspruch 6 oder 7, **dadurch gekennzeichnet, dass** ein in Umfangsrichtung (U) gemessener Abstand (a1; b1) zwischen dem einen Mischluftloch (6.2a; 7.2b) und dem mindestens einen weiteren Mischluftloch (6.3a; 7.3b) größer ist als ein Abstand (a2; b2) des mindestens einen weiteren Mischluftlochs (6.3a; 7.3b) zu einem in Umfangsrichtung (U) folgenden Mischluftloch eines in Umfangsrichtung (U) angrenzenden Wandsegments (322a/b).

9. Brennkammerbaugruppe nach Anspruch 8, **dadurch gekennzeichnet, dass** der in Umfangsrichtung (U) gemessene Abstand (a1; b1) zwischen dem einen Mischluftloch (6.2a; 7.2b) und dem mindestens einen weiteren Mischluftloch (6.3a; 7.3b) doppelt so groß ist wie der Abstand (a2; b2) des mindestens einen weiteren Mischluftlochs (6.3a; 7.3b) zu dem in Umfangsrichtung (U) folgenden Mischluftloch des in Umfangsrichtung angrenzenden Wandsegments (322a/b).

10. Brennkammerbaugruppe nach einem der Ansprüche 2 bis 5 und nach Anspruch 8 oder 9, **dadurch gekennzeichnet, dass** der Abstand (a1) zwischen dem einen Mischluftloch (6.2a) und dem weiteren, nicht an einem Eckpunkt des ersten gleichschenkligen Dreiecks (LDa) liegenden Mischluftlochs (6.3a) der Reihe (6a) an dem ersten Wandsegment (320a) der Länge der Basis des ersten gleichschenkligen Dreiecks (LDa) entspricht.

11. Brennkammerbaugruppe nach einem der Ansprüche 2 bis 5 und nach einem der Ansprüche 8 bis 10, **dadurch gekennzeichnet, dass** der Abstand (b1) zwischen dem einen Mischluftloch (7.2b) und dem weiteren, nicht an einem Eckpunkt des zweiten gleichschenkligen Dreiecks (LDb) liegenden Mischluftlochs (7.3b) der Reihe (7b) an dem zweiten Wandsegment (320b) der Länge der Basis des zweiten gleichschenkligen Dreiecks (LDb) entspricht.

12. Brennkammerbaugruppe nach einem der vorhergehenden Ansprüche, **dadurch gekennzeichnet, dass** je Wandsegment (320 a/b, 321a/b, 322a/b) in den ersten beiden in Achsrichtung (x) aufeinanderfolgenden Reihen (6a, 7a; 6b, 7b) insgesamt genau fünf Mischluftlöcher (6.1a-6.3a, 7.1a-7.2a; 6.1b-6.2b, 7.1b-7.3b) vorgesehen sind

13. Brennkammerbaugruppe nach einem der vorhergehenden Ansprüche, **dadurch gekennzeichnet, dass** ein axialer Abstand (c) zwischen zwei Reihen (6a, 6b; 7a, 7b) von Mischluftlöchern (6.1a-6.3a, 6.1b-6.2b; 7.1a-7.2a, 7.1b-7.3b) in einem Bereich von 0,05d bis 0,4d liegt, wobei d ein Abstand zwischen den ersten und zweiten Wandsegmenten (320a/b) ist.

14. Gasturbinentriebwerk mit wenigstens einer Brennkammerbaugruppe nach einem der vorhergehenden Ansprüche aufweist.

Fig. 1

EP 4 198 396 A1

Fig. 2

Fig. 3

Fig. 4A

Fig. 4B

Fig. 4C

Europäisches
Patentamt

European
Patent Office

Office européen
des brevets

# EUROPÄISCHER RECHERCHENBERICHT

**Nummer der Anmeldung**

EP 22 21 1672

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 150 072 A2 (ROLLS ROYCE DEUTSCHLAND [DE]) 31. Oktober 2001 (2001-10-31) * Absätze [0036], [0037]; Abbildungen 8,9 * | 1-11,13, 14 | INV. F23R3/06 F23R3/50 F23R3/00 |
| X | US 8 141 365 B2 (BRONSON THOMAS J [US]; ZUPANC FRANK JOSEPH [US] ET AL.) 27. März 2012 (2012-03-27) * Spalte 4, Zeile 26 – Spalte 5, Zeile 30; Abbildungen 3,4 * | 1,3,4, 13,14 | |
| A | DE 10 2014 226707 A1 (ROLLS ROYCE DEUTSCHLAND LTD & CO KG [DE]) 23. Juni 2016 (2016-06-23) * Absatz [0029] – Absatz [0041]; Abbildungen 3,4 * | 1-14 | |

**RECHERCHIERTE SACHGEBIETE (IPC)**

F23R

Der vorliegende Recherchenbericht wurde für alle Patentansprüche erstellt

| Recherchenort | Abschlußdatum der Recherche | Prüfer |
|---|---|---|
| Den Haag | 14. April 2023 | Mootz, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 21 1672

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-04-2023

| Im Recherchenbericht angeführtes Patentdokument | Datum der Veröffentlichung | Mitglied(er) der Patentfamilie | Datum der Veröffentlichung |
|---|---|---|---|
| EP 1150072 A2 | 31-10-2001 | DE 10020598 A1 | 07-03-2002 |
| | | EP 1150072 A2 | 31-10-2001 |
| | | US 2002017101 A1 | 14-02-2002 |
| US 8141365 B2 | 27-03-2012 | EP 2224170 A2 | 01-09-2010 |
| | | US 2010218503 A1 | 02-09-2010 |
| DE 102014226707 A1 | 23-06-2016 | DE 102014226707 A1 | 23-06-2016 |
| | | EP 3034944 A1 | 22-06-2016 |
| | | US 2016178198 A1 | 23-06-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3306196 A1